# EUROPEAN PATENT APPLICATION

(11) **EP 4 640 544 A1**
(43) Date of publication of application: **29.10.2025**
(21) Application number: 23907204.4
(22) Date of filing: 22.12.2023
(51) Int. Cl.: B62J 45/00, B62K 23/04, F02D 29/02

(54) **STRADDLED VEHICLE**

(30) Priority: 22.12.2022 WO PCT/JP2022/047390
(71) Applicant: Yamaha Hatsudoki Kabushiki Kaisha, Iwata-shi, Shizuoka 438-8501 (JP)
(72) Inventor: SASAE, Koichi, Iwata-shi, Shizuoka 438-8501 (JP); TAKEMOTO, Yasushi, Iwata-shi, Shizuoka 438-8501 (JP); ONISHI, Kotaro, Iwata-shi, Shizuoka 438-8501 (JP); JIMBA, Takatoshi, Iwata-shi, Shizuoka 438-8501 (JP)
(74) Representative: Zimmermann, Tankred Klaus
(86) International application number: PCT/JP2023/046232
(87) International publication number: WO 2024/135844

(57) **Abstract**

A straddled vehicle (1) includes an accelerator manipulation detection sensor (40) including a coupling part (401) and a direct detection part (402), the coupling part being connected to a manual accelerator operator (30) without any mechanical wire, the direct detection part being configured to directly detect a change in position of the coupling part. While a crankshaft (101) is in forward rotation or is stopped after a control device (50) stops a combustion operation of an engine (10) in response to an establishment of an idling stop condition, the control device applies: a rotational resistance; a force in forward rotation direction; or a force in reverse rotation direction, to the crankshaft by means of a starter motor (52). Then, when, as one condition, movement of the position of the coupling part (401) from an initial position to an adjacent region is detected based on a signal from the accelerator manipulation detection sensor (40), the control device (50) rotates the crankshaft (101) by means of the starter motor (52), to restart the engine (10).

## Description

### Technical Field

The present teaching relates to a straddled vehicle.

### Background Art

An idling stop (idle reduction) system is known as a means for improving the fuel efficiency of a vehicle. The idling stop system stops an engine that is in operation if a predetermined stop condition is satisfied, and restarts the engine that is stopped if a predetermined restart condition is satisfied.

Patent Literature 1 (PTL 1) discloses a motorcycle equipped with the idling stop system. In this motorcycle, an engine is automatically stopped if the motorcycle remains in the stopped condition for a predetermined time period. In this motorcycle, the engine that is stopped is restarted if a rider sits on a seat and additionally manipulates an accelerator grip. The accelerator grip is connected to a throttle valve of the engine via a mechanical wire, and the throttle opening is adjusted in accordance with a manipulation of the accelerator grip. The degree of the throttle valve opening is detected by a throttle sensor, to determine whether or not the accelerator grip is being manipulated.

### Citation List

### Patent Literature

PTL 1: Japanese Patent Application Laid-Open No. 2013-92096

### Summary of Invention

### Technical Problem

The present teaching aims to suppress a variation in time length taken until an engine is restarted, the variation being caused by a variation in speed at which a rider manipulates a manual accelerator operator.

### Solution to the Problem

In a straddled vehicle as typified by a motorcycle, an accelerator operator is often disposed in a handlebar. The handlebar is used to steer the straddled vehicle. For a left turn of the straddled vehicle, a rider steers the handlebar counterclockwise. For a right turn of the straddled vehicle, the rider steers the handlebar clockwise. In a case whereby an accelerator operator and a throttle valve are connected by a mechanical wire as in the motorcycle of PTL 1, the mechanical wire is arranged so as to have a predetermined amount of looseness while the handlebar is not steered. The reason is as follows.

For example, assume a case where a mechanical wire is tensioned while a handlebar is not steered. In this case, if the handlebar is steered either clockwise or counterclockwise, an accelerator operator disposed in the handlebar also moves. As the accelerator operator moves, the mechanical wire connected to the accelerator operator is pulled. Consequently, a throttle valve may be opened even when the accelerator operator is free from manipulation. This is why, in a case where an accelerator operator and a throttle valve are connected by a mechanical wire, the mechanical wire is arranged so as to have a predetermined amount of looseness in order to avoid opening the throttle valve even when the handlebar is steered. The looseness of the mechanical wire, however, causes a delay in response of the throttle valve to a manipulation of the accelerator operator.

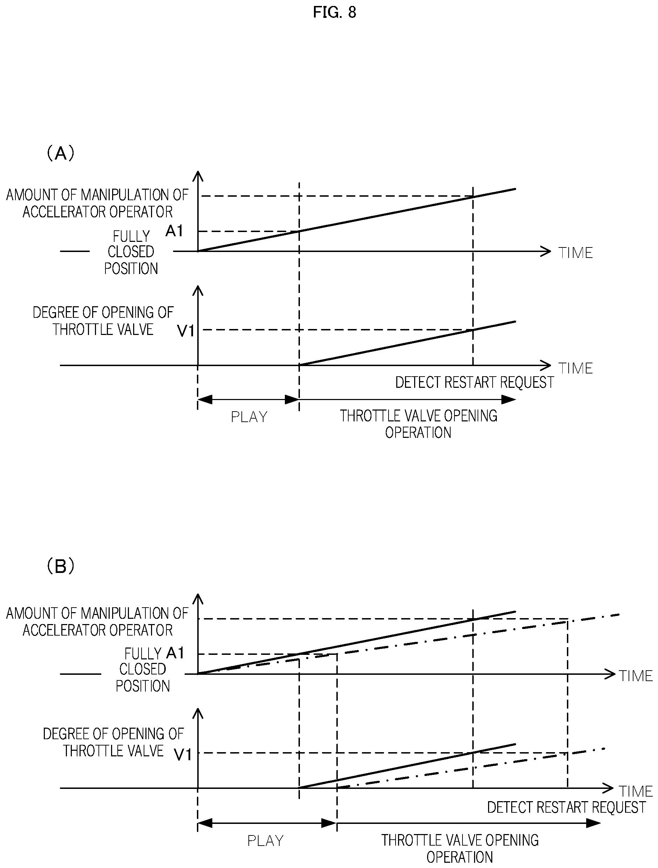

FIG. 8(A) shows a response time of a throttle valve responding to a manipulation of an accelerator operator in a conventional straddled vehicle in which the accelerator operator and the throttle valve are connected by a mechanical wire. In the conventional straddled vehicle, like the one disclosed in PTL 1, until the accelerator operator at a fully closed position is manipulated to a predetermined amount A1, the manipulation of the accelerator operator is absorbed by the looseness of the mechanical wire, so that the throttle valve is not opened (slack period is long). If the manipulation of the accelerator operator becomes equal to or more than the predetermined amount A1, the throttle valve is opened in accordance with the manipulation of the accelerator operator. If the degree of opening of the throttle valve reaches a predetermined value V1, the straddled vehicle detects that a driver is requesting that an engine be restarted. To restart the engine that has been stopped based on the degree of opening of the throttle valve as in the straddled vehicle of PTL 1, it is required that the amount of manipulation of the accelerator operator exceeds a certain threshold. As a result, a long time length is taken until the straddled vehicle detects the rider's restart request.

Here, waiting at a traffic light is one example of a situation where the idling stop system works. A rider, in general, wishes to have a straddled vehicle start running smoothly after the waiting at a traffic light ends. If the straddled vehicle requires that the amount of manipulation of an accelerator operator exceeds a certain threshold in order to restart an engine as described above, the rider tries to early restart the engine by quickly manipulating the accelerator operator at a time of start-running. The speed at which the accelerator operator is manipulated varies from one rider to another.

FIG. 8(B) shows a variation in time length taken until the engine is restarted, the variation being caused by a speed at which the accelerator operator is manipulated, in the conventional straddled vehicle in which the accelerator operator and the throttle valve are connected by the mechanical wire. In this figure, the solid lines indicate a case of the accelerator operator manipulated at a high speed, and the dot-dash lines indicate a case of the accelerator operator manipulated at a low speed. In a case of the accelerator operator manipulated at a low speed, a long time length is taken until the amount of manipulation of the accelerator operator reaches the predetermined amount A1. Accordingly, a long time length is taken until the degree of opening of the throttle valve reaches the predetermined value V1, too. Since the speed at which the accelerator operator is manipulated varies from one rider to another, the time length taken until the engine is restarted varies. Consequently, some riders may feel like a long time length is taken until the engine is restarted. Especially in a straddled vehicle in which an accelerator operator is manipulated with a rider's hand, the rider can more readily recognize a reaction of an engine to a manipulation of the accelerator operator, as compared to a vehicle in which an accelerator operator is manipulated with a driver's foot.

The inventors of the present teaching conducted studies for suppressing a variation in time length taken until an engine is restarted. In a case where the engine has been stopped by the idling stop system, a rider's manipulation of an accelerator operator can be regarded as a rider's request for restarting the engine. The inventors of the present teaching considered that if a straddled vehicle is able to quickly detect a rider's restart request, the time length taken until the engine is restarted can be shortened, which consequently can suppress a variation in time length taken until the engine is restarted.

One conceivable way to allow a straddled vehicle to quickly detect a rider's restart request is by adjusting the setting of the straddled vehicle such that the engine restarts if an accelerator operator is slightly manipulated. This concept, however, is based on the premise that the straddled vehicle is capable of detecting a slight manipulation of the accelerator operator. As described above, in a straddled vehicle where an accelerator operator and a throttle valve are connected by a mechanical wire and a manipulation of the accelerator operator is obtained based on the degree of opening of the throttle valve, the vehicle is not able to detect a manipulation made on the accelerator operator unless the amount of manipulation of the accelerator operator exceeds a certain threshold. It is difficult for such a straddled vehicle to quickly detect a rider's restart request. Thus, the inventors of the present teaching considered that to shorten the time length taken until the engine is restarted, it is necessary to quickly detect a rider's restart request by means of a configuration different from that of the straddled vehicle in which the accelerator operator and the throttle valve are connected by the mechanical wire and a manipulation of the accelerator operator is obtained based on the degree of opening of the throttle valve. Based on the studies described above, the present teaching is accomplished.
(1) A straddled vehicle of the present teaching includes:
   an engine having a crankshaft;
   a handlebar used for steering;
   a manual accelerator operator disposed in the handlebar, the manual accelerator operator being configured to allow a rider to manipulate the manual accelerator operator with the hand in order to control an output of the engine; and
   a control device configured to restart the engine having been stopped in response to an establishment of an idling stop condition, by means of a starter motor,
   the straddled vehicle further including an accelerator manipulation detection sensor configured to detect a manipulation of the manual accelerator operator, the accelerator manipulation detection sensor being disposed in the handlebar,
   the control device being configured to detect both a start-running request and a restart request based on a signal from the accelerator manipulation detection sensor, which is disposed in the handlebar and configured to detect that the manual accelerator operator is manipulated, so as to detect the restart request that then initiates a restart operation for restarting the engine before detecting the start-running request, with a detection of the restart request being sequentially before a detection of the start-running request, the start-running request being a request for making the straddled vehicle start running, the restart request being a request different from the start-running request, the restart request being a request for restarting the engine having been stopped in response to the establishment of the idling stop condition, and being set earlier than the start-running request.
      In the foregoing straddled vehicle, the accelerator manipulation detection sensor disposed in the handlebar detects two intentions of the rider, namely, a start-running request, which represents a rider's intention to make the vehicle start running, and a restart request, which represents a rider's intention to make the engine restart. The control device, upon detecting the restart request, initiates the restart operation for restarting (e.g., a combustion operation of) the engine before detecting the start-running request. That is, at a time when the rider inputs the start-running request to the vehicle with an intention to make the vehicle start running, the engine has already initiated the restart. The control device detects the restart request and the start-running request via the accelerator manipulation detection sensor disposed in the handlebar. In the foregoing straddled vehicle, therefore, the restart request is detected earlier as compared with a configuration in which a manipulation of a manual accelerator operator is detected based on the degree of opening of a throttle valve connected to the manual accelerator operator by a mechanical wire. Accordingly, a variation in time length taken until the engine is restarted can be suppressed, the variation being caused by a variation in speed at which the rider manipulates the manual accelerator operator.
(2) The straddled vehicle according to (1) above may be configured as follows.

The control device is configured to
while the crankshaft is in forward rotation or is stopped after the control device stops a combustion operation of the engine in response to the establishment of the idling stop condition, apply: a rotational resistance; a force in forward rotation direction; or a force in reverse rotation direction. to the crankshaft by means of the starter motor to move a position of the crankshaft before the restart request is detected, and
after detecting the restart request based on a signal from the accelerator manipulation detection sensor disposed in the handlebar, execute not a control for bringing the crankshaft into reverse rotation, but execute a control for bringing the crankshaft into forward rotation, to restart the engine.

The straddled vehicle is a vehicle configured to turn by the rider manipulating a handle and the rider's weight shifting. The straddled vehicle, therefore, is required to have a high responsiveness to the rider's manipulation intention. For the straddled vehicle, the agility, lightness, and convenience of the vehicle are important factors. Thus, it is desired that the straddled vehicle be small and lightweight. In the straddled vehicle, restarting the engine after idling is stopped is different from normal starting in that the restarting needs to be done on a travel lane of a road while the vehicle is waiting at a traffic light, for example. This is why a straddled vehicle having the idling-stop function is required to have a higher responsiveness.

When the engine having been stopped by the idling stop function restarts, the starter motor is driven to rotate the crankshaft. A load that the starter motor receives at this time is not constant. For example, in a case of a four-stroke engine, the starter motor receives a high load in order that the crankshaft can rotate beyond the compression top dead center. In this respect, it is conceivable that a starter motor capable of outputting a higher torque is adopted in the straddled vehicle. Adoption of such a starter motor leads to an increase in external size of the starter motor, which leads to difficulties in making the straddled vehicle small and lightweight, and can result in poor responsiveness. Alternatively, in a case of rotating the crankshaft by means of a starter motor having a low output, it is conceivable that the crankshaft is brought into reverse rotation (swung back), and then into forward rotation. In this case, however, the time length taken until the engine is restarted is prolonged to the degree corresponding to the swing-back of the crankshaft. That is, even though the straddled vehicle can quickly detect the rider's restart request, it is difficult to quickly restart the engine if the time length taken until the engine initiates the combustion operation is long.

In the straddled vehicle according to (2) above, the starter motor applies a resistance or a force to the crankshaft while the crankshaft is in forward rotation by inertia or is stopped after the combustion operation of the engine is stopped by the idling stop function. It therefore is possible to stop the crankshaft at any crank angle position before the engine is restarted. For example, it is possible to stop the crankshaft in the middle of an expansion stroke, and to accelerate the crankshaft in a run-up section composed of the rest of the expansion stroke, an exhaust stroke, and an intake stroke. The run-up section allows the crankshaft to obtain a moment of inertia required to overcome the compression top dead center. If the crankshaft is able to be stopped at any crank angle position in this manner, even a starter motor having a low output is able to restart the engine without a swing-back of the crankshaft. In addition, in the foregoing straddled vehicle, the restart request is quickly detected by the accelerator manipulation detection sensor disposed in the handlebar. Accordingly, the foregoing straddled vehicle is able not only to quickly detect the rider's restart request but also to shorten the time length taken from when the restart request is detected to when the engine is restarted, and thus can shorten the total time length from when the rider inputs the restart request to the vehicle to when the engine is restarted.

(3) The straddled vehicle according to (1) or (2) above may be configured as follows.

The accelerator manipulation detection sensor includes
a coupling part configured to be coupled with a manipulation of the manual accelerator operator by being directly fixed to or indirectly connected to the manual accelerator operator not via a mechanical wire but via a gear mechanism or a link mechanism, and
a direct detection part configured to directly detect a change in position of the coupling part by means of a magnetic mechanism, a variable resistance mechanism, or a switch mechanism, the direct detection part being fixed to the handlebar,

the accelerator manipulation detection sensor detects that the position of the coupling part is moved from an initial position to an adjacent region, the initial position being a position at which the coupling part is located when the manual accelerator operator is free from manipulation, the adjacent region being adjacent to the initial position, and
the control device restarts the engine when, as one condition, movement of the position of the coupling part from the initial position to the adjacent region is detected based on a signal from the accelerator manipulation detection sensor, which is disposed in the handlebar and connected to the manual accelerator operator without any mechanical wire.

In the straddled vehicle of (3), the direct detection part in the accelerator manipulation detection sensor detects that the position of the coupling part is changed from the initial position by means of the magnetic mechanism, the variable resistance mechanism, or the switch mechanism. The position of the coupling part changes in conjunction with a manipulation of the manual accelerator operator. Thus, in the foregoing straddled vehicle, the engine is restarted not based on the degree of opening of a throttle valve but based on a manipulation of the manual accelerator operator detected by the accelerator manipulation detection sensor. The coupling part is directly fixed to or indirectly connected to the manual accelerator operator via the gear mechanism or the link mechanism. The gear mechanism, the link mechanism, and the direct connection do not have a large looseness like that of the mechanical wire, and thus are less likely to absorb the manipulation of the manual accelerator operator than the mechanical wire. Therefore, even if the amount of manipulation of the manual accelerator operator is small, the manipulation of the manual accelerator operator is easily reflected in change in position of the coupling part. This means that a range (play) in which a manipulation of the manual accelerator operator is not detected can be narrowed or removed in a manipulation region on the manual accelerator operator. Consequently, the control device is able to quickly detect that the position of the coupling part is changed from the initial position to the adjacent region. In other words, the control device is able to quickly detect the rider's restart request, which is reflected in the manipulation of the manual accelerator operator.

(4) The straddled vehicle of any of (1) to (3) above may be configured as follows.

The starter motor is a starter generator having a power generation function, and
upon detecting the restart request based on a signal from the accelerator manipulation detection sensor disposed in the handlebar before detecting the start-running request, the control device not only initiates a restart operation for restarting the engine but also drives the starter motor and executes an initial ignition assist control for controlling the starter motor so as to add an output of the starter motor to an output of the engine, the initial ignition assist control being executed in at least a part of a period from the detection of the restart request to the initial ignition of the engine.

(5) The straddled vehicle of any of (1) to (4) above may be configured as follows.

The starter motor is a starter generator having a power generation function, and
upon detecting the restart request based on a signal from the accelerator manipulation detection sensor disposed in the handlebar before detecting the start-running request, the control device not only initiates a restart operation for restarting the engine but also drives the starter motor and executes a sustained ignition assist control for controlling the starter motor so as to add an output of the starter motor to an output of the engine, the sustained ignition assist control being executed in at least a part of a period from the initial ignition of the engine to sustained ignition of the engine.

In the straddled vehicle of (4) above, after the engine initiates the restart, the starter generator assists the engine until the initial ignition. In the straddled vehicle of (5) above, after the initial ignition, the starter generator assists the engine until the sustained ignition. This can reduce a load that is put on the engine until the engine initiates the combustion operation or until, after the initial ignition, the number of revolutions of the engine reaches an idling rpm, for example. In this straddled vehicle, the restart request can be detected quickly, and therefore the engine assist that the starter generator provides after the rider inputs the restart request or the engine assist that the starter generator provides after the initial ignition can be advanced in time. As a result, in this straddled vehicle, the starter generator can quickly initiate the engine assist. Accordingly, this straddled vehicle makes it possible that a variation in time length taken until the engine is restarted is suppressed, and also that the combustion operation of the engine is initiated quickly or that the number of revolutions of the engine reaches the idling rpm quickly.

(6) The straddled vehicle of any of (1) to (5) above may be configured as follows.
upon detecting the start-running request based on a signal from the accelerator manipulation detection sensor disposed in the handlebar, the control device executes a traveling-purpose combustion operation control for controlling the engine so as to couple the manual accelerator operator with a throttle valve disposed in an intake pipe of the engine.

In the straddled vehicle of (6) above, if the start-running request, which the rider inputs to the vehicle through the manual accelerator operator, is detected, the engine performs the combustion operation in conjunction with a rider's manipulation of the manual accelerator operator.

(7) The straddled vehicle of any of (1) to (6) above may be configured as follows.
upon detecting the restart request based on a signal from the accelerator manipulation detection sensor disposed in the handlebar before detecting the start-running request, the control device executes a restart control for controlling the engine until sustained ignition.

(8) The straddled vehicle of (7) above may be configured as follows.
upon detecting the restart request based on a signal from the accelerator manipulation detection sensor disposed in the handlebar before detecting the start-running request, the control device executes the restart control so as not to couple the manual accelerator operator with a throttle valve disposed in an intake pipe of the engine.

In the straddled vehicles of (7) and (8) above, the engine is automatically controlled until the sustained ignition irrespective of a rider's manipulation of the manual accelerator operator. Accordingly, the foregoing straddled vehicle can reduce a rider's work, and also can optimize the restart of the engine.

The "straddled vehicle" is transport equipment. The straddled vehicle is a vehicle driven by human. The straddled vehicle is a motorcycle, for example. The straddled vehicle is not limited to the motorcycle, and may be a motor tricycle, for example. The straddled vehicle has two or three wheels, for example. The straddled vehicle has at least one front wheel and at least one rear wheel, for example. The type of the straddled vehicle is not particularly limited, and examples thereof include a scooter type, a moped type, an off-road type, and an on-road type. The straddled vehicle is a vehicle of a type in which a rider sits straddling a seat, for example. In the straddled vehicle, for example, the sitting rider has their left leg positioned to the left relative to the center in the left-right direction of the straddled vehicle, and their right leg positioned to the right relative to the center in the left-right direction of the straddled vehicle. The straddled vehicle may have a cabin. The straddled vehicle is also a leaning vehicle, for example. The leaning vehicle includes a vehicle body that leans in either one of leftward or rightward direction when the leaning vehicle turns in that direction, for example. To be specific, the vehicle body leans in the leftward direction when the leaning vehicle turns left, and leans in the rightward direction when the leaning vehicle turns right, for example. The leaning vehicle includes at least one steered wheel, which leans together with the vehicle body, for example. The leaning vehicle includes at least one driving wheel, which leans together with the vehicle body, for example.

The "engine" generates power for making the straddled vehicle travel, for example. The engine generates power for making the straddled vehicle start running, for example. The power generated by the engine is transmitted to the driving wheel via a transmission, for example. The power generated by the engine is transmitted to the transmission not via a torque converter, for example. The transmission includes a centrifugal clutch, for example. The centrifugal clutch allows and blocks power transmission from the engine to the driving wheel, for example. The engine is an internal combustion engine, for example. The engine is a fuel injection type engine, for example. The engine is a reciprocating engine, for example. The engine is a four-stroke engine, for example. The engine is a spark ignition type engine in which fuel combustion is caused by a spark plug, for example. The engine may be a diesel engine in which fuel combustion is caused by compressed air. The fuel of the engine is a gasoline, a liquefied petroleum gas (LP gas), hydrogen, an alcohol, a biofuel, a synthetic fuel, or the like, for example. The engine is an in-line type, V-type, or horizontally opposed type engine, for example. The engine is a single-cylinder engine, for example. The engine may be a multi-cylinder engine. The engine includes at least one cylinder, for example. The engine includes at least one piston, for example. The at least one piston is received in a corresponding cylinder, for example. The engine includes a crankshaft, which is connected to the at least one piston via a connecting rod, for example. The engine is supported by a vehicle body of the straddled vehicle, for example. The engine includes a throttle device, for example. The throttle device includes a throttle valve and an actuator, for example.

The "idling stop condition" is a condition for stopping the combustion operation of the engine by the idling stop function, for example. The idling stop condition is determined by, for example, the amount of manipulation of the accelerator operator, the degree of opening of a throttle valve, a vehicle speed, and the like. The engine stopped in response to the establishment of the idling stop condition is restarted in response to an establishment of a restart condition, for example.

The restart condition is a condition for restarting the engine having been stopped in response to the establishment of the idling stop condition, for example. One of the restart conditions is that the control device detects that the amount of manipulation of the manual accelerator operator becomes equal to or more than a restart value based on a signal from the accelerator manipulation detection sensor, for example. Another is that the control device detects that the position of the coupling part is moved from the initial position to the adjacent region based on a signal from the accelerator manipulation detection sensor, for example. The restart condition may include another condition in addition to the detection of the restart value by the control device.

The control device controls the degree of opening of the throttle valve based on a manipulation of the manual accelerator operator, for example. The control device is electrically connected to an actuator that drives the throttle valve based on a manipulation of the manual accelerator operator, for example.

The control device is configured, for example, such that: the control device detects that the position of the coupling part is changed from the initial position to the adjacent region based on a signal from the accelerator manipulation detection sensor, which is outputted in response to a manipulation of the manual accelerator operator; and then the control device restarts the engine based at least on a manipulation of the manual accelerator operator, before the control device shifts the degree of opening of the throttle valve from an extremely low opening degree region to a low opening degree region, given that a movable range of the throttle valve is equally divided into five regions, namely, an extremely low opening degree region including a minimum opening degree position, a low opening degree region, a middle opening degree region, a high opening degree region, and an extremely high opening degree region including a maximum opening degree position.

The throttle valve is disposed in the intake pipe of the engine, for example. The throttle valve is of a rotary valve type, for example. The throttle valve has a rotation axis, for example. The throttle valve is rotatable about the rotation axis, for example. The throttle valve, by rotating about the rotation axis, changes the channel cross-sectional area of the intake pipe, for example. The channel cross-sectional area of the intake pipe corresponds to the degree of opening of the throttle valve, for example. The throttle valve adjusts the amount of air to be supplied to a combustion chamber of the engine, for example. The throttle valve is electrically connected to the control device, for example. The throttle valve is controlled electronically, for example. The throttle valve may be connected to the manual accelerator operator by a mechanical wire, for example. In such a configuration, too, a manipulation of the manual accelerator operator is detected by the accelerator manipulation detection sensor.

The movable range of the throttle valve is a range from the minimum opening degree position to the maximum opening degree position of the throttle valve, for example. The minimum opening degree position is a position at which the throttle valve minimizes the channel cross-sectional area of the intake pipe, for example. The minimum opening degree position is a position at which the throttle valve is closed, for example. At the minimum opening degree position, the degree of opening of the throttle valve is zero degrees, for example. Here, the degree of opening of the throttle valve at the minimum opening degree position does not always have to be zero degrees. For instance, in a case where the throttle valve is opened to a predetermined amount while the manual accelerator operator is free from manipulation, the degree of opening of the throttle valve at the minimum opening degree position is not zero degrees. At the minimum opening degree position, the output of the engine is minimum, for example. The maximum opening degree position is a position at which the throttle valve maximizes the channel cross-sectional area of the intake pipe, for example. At the maximum opening degree position, the degree of opening of the throttle valve is substantially 90 degrees, for example. More specifically, at the maximum opening degree position, the degree of opening of the throttle valve is 85 degrees, for example.

The extremely low opening degree region is a region having a throttle valve opening degree range with the smallest upper limit value, out of the regions into which the movable range of the throttle valve is equally divided, for example. In the extremely low opening degree region, the degree of opening of the throttle valve has a lower limit of zero degrees or more, for example. In the extremely low opening degree region, the degree of opening of the throttle valve has a lower limit of two degrees or less, for example. In the extremely low opening degree region, the degree of opening of the throttle valve has an upper limit of less than 22 degrees, for example. In the extremely low opening degree region, the degree of opening of the throttle valve may have an upper limit of 20 degrees or less, for example.

The control device restarts the engine based at least on a signal from the accelerator manipulation detection sensor, before the degree of opening of the throttle valve shifts from the extremely low opening degree region to the low opening degree region, and also before the degree of opening of the throttle valve reaches a position in the extremely low opening degree region, the position corresponding to 1/2 of the throttle valve opening degree range, for example. The control device may restart the engine based at least on a signal from the accelerator manipulation detection sensor, before the degree of opening of the throttle valve shifts from the extremely low opening degree region to the low opening degree region, and also before the degree of opening of the throttle valve reaches a position in the extremely low opening degree region, the position corresponding to 1/3 of the throttle valve opening degree range, for example. The control device may restart the engine based at least on a signal from the accelerator manipulation detection sensor, before the degree of opening of the throttle valve shifts from the extremely low opening degree region to the low opening degree region, and also before the degree of opening of the throttle valve reaches a position in the extremely low opening degree region, the position corresponding to 1/4 of the throttle valve opening degree range, for example.

The control device restarts the engine based at least on a signal from the accelerator manipulation detection sensor, before the degree of opening of the throttle valve shifts from the extremely low opening degree region to the low opening degree region, and also before the degree of opening of the throttle valve reaches 10 degrees in the extremely low opening degree region, for example. The control device restarts the engine based at least on a signal from the accelerator manipulation detection sensor, before the degree of opening of the throttle valve shifts from the extremely low opening degree region to the low opening degree region, and also before the degree of opening of the throttle valve reaches eight degrees in the extremely low opening degree region, for example. The control device restarts the engine based at least on a signal from the accelerator manipulation detection sensor, before the degree of opening of the throttle valve shifts from the extremely low opening degree region to the low opening degree region, and also before the degree of opening of the throttle valve reaches five degrees in the extremely low opening degree region, for example.

The low opening degree region is a region having a throttle valve opening degree range with the second smallest upper limit value, out of the regions into which the movable range of the throttle valve is equally divided, for example. The low opening degree region is adjacent to the extremely low opening degree region in the movable range of the throttle valve, for example. In the low opening degree region, the degree of opening of the throttle valve has a lower limit of more than 18 degrees, for example. In the low opening degree region, the degree of opening of the throttle valve may have a lower limit of more than 20 degrees, for example. In the low opening degree region, the degree of opening of the throttle valve may have a lower limit of 22 degrees or more, for example.

The "actuator" is an electric motor, for example. The actuator is connected to the throttle valve, for example. The actuator may be connected to the throttle valve via a decelerator, for example. The actuator drives the throttle valve, for example. The actuator controls the degree of opening of the throttle valve, for example. The actuator drives the throttle valve in response to a signal received from the control device.

The "handlebar" is used for steering of the straddled vehicle, for example. The handlebar is rotatably attached to the vehicle body of the straddled vehicle, for example. The handlebar is capable of rotating clockwise or counterclockwise in a top view of the straddled vehicle, for example. As the handlebar rotates counterclockwise, the steered wheel of the straddled vehicle is steered to left, and as the handlebar rotates clockwise, the steered wheel of the straddled vehicle is steered to right. The handlebar is arranged farther in forward direction than a seat of the straddled vehicle, for example. The handlebar is arranged at a position higher than the seat of the straddled vehicle, for example. The handlebar is disposed within reach of the rider's hand, for example. The handlebar extends in left-right direction of the straddled vehicle, for example. The handlebar extends in the left-right direction across the center of the straddled vehicle in the left-right direction, for example. In the left-right direction of the straddled vehicle, for example, one end portion of the handlebar is positioned to the left of the center of the straddled vehicle, and the other end portion thereof is positioned to the right of the center of the straddled vehicle. The handlebar is just required to extend in the left-right direction as a whole, and the handlebar having a curved portion in the middle of it may be acceptable, for example. In one example, the manual accelerator operator is disposed in one end portion of the handlebar, and a grip is disposed in the other end portion thereof. The handlebar connects the manual accelerator operator to the grip, for example.

The "manual accelerator operator" is manipulated with the rider's hand, for controlling an output of the engine, for example. The manual accelerator operator is disposed in a right end portion of the handlebar, for example. The manual accelerator operator may be disposed in a left end portion of the handlebar. The manual accelerator operator has a grip shape so as to allow the rider to grip the manual accelerator operator with the hand, for example. The manual accelerator operator may have a knob-like shape for allowing the rider to manipulate the manual accelerator operator with their finger, for example. That is, the manual accelerator operator may be either in an accelerator grip style and in a finger throttle style. The manual accelerator operator is rotatable about the axis of the handlebar, for example. As the manual accelerator operator is rotated toward the rider (backward of the straddled vehicle), for example, the manual accelerator operator increases the degree of opening of the throttle valve, to increase the output of the engine. As the manual accelerator operator is rotated away from the rider (forward of the straddled vehicle), for example, the manual accelerator operator reduces the degree of opening of the throttle valve, to reduce the output of the engine. The manual accelerator operator is configured such that a manipulation is allowed to a predetermined amount from the position at which the manual accelerator operator is located when free from manipulation, for example. While the manual accelerator operator is free from manipulation, the throttle valve is at the minimum opening degree position, for example. When the manual accelerator operator is manipulated to the upper limit of the predetermined amount, the throttle valve is located at the maximum opening degree position, for example.

The "accelerator manipulation detection sensor" detects a position of the manual accelerator operator, for example. The accelerator manipulation detection sensor detects a manipulation of the manual accelerator operator, by detecting the position of the manual accelerator operator, for example. A manipulation of the manual accelerator operator is detected by the direct detection part detecting a change in position of the coupling part, for example. The accelerator manipulation detection sensor detects a manipulation of the manual accelerator operator representing the rider's restart request, for example. The accelerator manipulation detection sensor does not detect the degree of opening of the throttle valve of the engine, for example. The accelerator manipulation detection sensor transmits to the control device a signal indicating the amount of change in position of the coupling part (the amount of manipulation of the manual accelerator operator) detected, for example.

The accelerator manipulation detection sensor is disposed in the handlebar, for example. The accelerator manipulation detection sensor is disposed adjacent to the manual accelerator operator, for example. The accelerator manipulation detection sensor is disposed at a position closer to the center of the handlebar in the axial direction of the handlebar than the manual accelerator operator is, for example. The accelerator manipulation detection sensor is positioned to the right of the center of the straddled vehicle in the left-right direction of the straddled vehicle, for example. The accelerator manipulation detection sensor may be positioned to the left of the center of the straddled vehicle in the left-right direction of the straddled vehicle, for example.

The position of the coupling part changes as the coupling part rotates in conjunction with a manipulation of the manual accelerator operator, for example. The position of the coupling part may change as the coupling part moves along a predetermined direction in conjunction with a manipulation of the manual accelerator operator, for example.

The accelerator manipulation detection sensor quickly detects a manipulation of the manual accelerator operator, for example. To be more specific, the accelerator manipulation detection sensor detects a manipulation of the manual accelerator operator earlier as compared to in a straddled vehicle that has a throttle valve and a manual accelerator operator connected by a mechanical wire, and that detects a manipulation of the manual accelerator operator and restarts an engine based on the degree of opening of the throttle valve, for example.

The "magnetic mechanism" is a mechanism in which the direct detection part detects a change in position of the coupling part by using a change of a magnetic field, for example. In a configuration in which the direct detection part uses the magnetic mechanism to detect a change in position of the coupling part, the coupling part includes a magnetic field generation member for generating a magnetic field. The magnetic field generation member is a permanent magnet, for example. In such a configuration, the direct detection part includes a magnetic sensor, for example. The magnetic sensor is a Hall element, for example. The direct detection part is arranged in the magnetic field generated by the magnetic field generation member, for example. The direct detection part is arranged at a position where the direct detection part is able to detect a change of the magnetic field generated by the magnetic field generation member, for example. The arrangement of the direct detection part is not particularly limited, as long as the direct detection part is able to detect a change of the magnetic field generated by the magnetic field generation member. The position at which the direct detection part is arranged may be any of forward, backward, upward, downward, leftward, and rightward of the magnetic field generation member, for example. As the position of the coupling part changes, the relative position between the direct detection part and the magnetic field generation member changes, too, for example. Consequently, a flux density detected by the direct detection part changes, for example. The direct detection part detects the change in flux density, as an amount of manipulation of the manual accelerator operator, for example.

The "variable resistance mechanism" is a mechanism in which the direct detection part detects a change in position of the coupling part by using a change in electrical resistance value, for example. The variable resistance mechanism is a potentiometer, for example. In a configuration in which the direct detection part uses the variable resistance mechanism to detect a change in position of the coupling part, the coupling part includes an electrical resistance element, for example. The direct detection part includes a contact member for contacting the electrical resistance element, for example. The contact member is a brush, for example. The variable resistance mechanism is of a linear type in which the contact member moves linearly, for example. The variable resistance mechanism may be of a rotary type in which the contact member rotates, for example. As the position of the coupling part changes, a position in the electrical resistance element contacted by the contact member changes, for example. Consequently, the electrical resistance value of the electrical resistance element changes, for example. The direct detection part detects the change in electrical resistance value, as an amount of manipulation of the manual accelerator operator, for example.

The "switch mechanism" is a mechanism in which the direct detection part detects a change in position of the coupling part by using opening and closing of an electrical circuit, for example. Examples of the switch mechanism include a push button type, a sliding type, a rotary type, a relay type, and the like. In a configuration in which the direct detection part uses the switch mechanism to detect a change in position of the coupling part, the coupling part includes a contact point, for example. The direct detection part includes a terminal capable of contact with and separation from the contact point, for example. As the position of the coupling part changes, the contact point comes into contact with or separation from the terminal, so that the electrical circuit is opened or closed, for example. Consequently, passage of a current through the electrical circuit is allowed or blocked (ON/OFF), for example. The direct detection part detects ON/OFF of the electrical circuit, as an amount of manipulation of the manual accelerator operator, for example.

The "direct detection part configured to directly detect a change in position of the coupling part" means that the direct detection part detects a physical quantity that is changed by a change in position of the coupling part, for example. This phrase encompasses not only a case where the direct detection part comes into physical contact with the coupling part to directly detect a change in position of the coupling part, but also a case where the direct detection part is not in contact with the coupling part but nevertheless directly detects a change in physical quantity caused by a change in position of the coupling part. For example, in the variable resistance mechanism and the switch mechanism, the direct detection part physically contacts the coupling part, to directly detect the electrical resistance value and ON/OFF of the electrical circuit. For example, in the magnetic mechanism, the direct detection part, without contact with the coupling part, directly detects a change of a magnetic field.

The "gear mechanism" is a mechanism in which the manual accelerator operator is connected to the coupling part of the accelerator manipulation detection sensor via a gear, for example. The gear mechanism transmits a manipulation of the manual accelerator operator to the coupling part, for example. The gear mechanism includes a coupling gear, for example. The coupling gear is fixed to the manual accelerator operator, for example. The coupling gear is coupled with a manipulation of the manual accelerator operator, for example. The coupling gear rotates through an angle corresponding to an amount of manipulation of the manual accelerator operator, for example. The coupling gear is meshed with a gear disposed in the coupling part, for example, to transmit a manipulation of the manual accelerator operator to the coupling part. The coupling gear may transmit a manipulation of the manual accelerator operator to the coupling part via another member, for example. The gear ratio between the coupling gear and the gear disposed in the coupling part may or may not be one, for example. The number of teeth included in the coupling gear is greater than the number of teeth of the gear disposed in the coupling part, for example.

The "link mechanism" is a mechanism in which the manual accelerator operator is connected to the coupling part of the accelerator manipulation detection sensor via a link member, for example. The link mechanism transmits a manipulation of the manual accelerator operator to the coupling part, for example. The link mechanism includes a rider wheel and at least one link member, for example. The rider wheel has a disk-like shape, for example. The rider wheel is fixed to the manual accelerator operator, for example. The rider wheel is coupled with a manipulation of the manual accelerator operator, for example. The rider wheel rotates through an angle corresponding to an amount of manipulation of the manual accelerator operator, for example. The link member has a bar-like shape, for example. The link member has its one end portion attached to a disk surface of the rider wheel, for example. The one end portion of the link member is attached at a location on the disk surface, the location being shifted from the center of the rider wheel, for example. The other end portion of the link member is attached to the coupling part, for example. The link member transmits rotation of the rider wheel caused by a manipulation of the manual accelerator operator to the coupling part, for example. The number of link members may be more than one, for example.

The "coupling part directly fixed to the manual accelerator operator" means that the coupling part is fixed to the manual accelerator operator without interposition of any other member, for example. In a configuration in which the coupling part is directly fixed to the manual accelerator operator, the coupling part is coupled with a manipulation of the manual accelerator operator, for example. The coupling part directly fixed to the manual accelerator operator is configured to be unified with the manual accelerator operator, for example. The coupling part directly fixed to the manual accelerator operator constitutes a part of the manual accelerator operator, for example.

In the straddled vehicle according to the embodiment, the manual accelerator operator and the coupling part are connected by any one of the gear mechanism, the link mechanism, or the direct connection, and the direct detection part detects a change in position of the coupling part by means of any one of the magnetic mechanism, the variable resistance mechanism, or the switch mechanism. More details are as follows.

For example, the coupling part is indirectly connected to the manual accelerator operator via the gear mechanism, and the direct detection part detects a change in position of the coupling part by means of the magnetic mechanism. For example, the coupling part is indirectly connected to the manual accelerator operator via the gear mechanism, and the direct detection part detects a change in position of the coupling part by means of the variable resistance mechanism. For example, the coupling part is indirectly connected to the manual accelerator operator via the gear mechanism, and the direct detection part detects a change in position of the coupling part by means of the switch mechanism.

For example, the coupling part is indirectly connected to the manual accelerator operator via the link mechanism, and the direct detection part detects a change in position of the coupling part by means of the magnetic mechanism. For example, the coupling part is indirectly connected to the manual accelerator operator via the link mechanism, and the direct detection part detects a change in position of the coupling part by means of the variable resistance mechanism. For example, the coupling part is indirectly connected to the manual accelerator operator via the link mechanism, and the direct detection part detects a change in position of the coupling part by means of the switch mechanism.

For example, the coupling part is directly fixed to the manual accelerator operator, and the direct detection part detects a change in position of the coupling part by means of the magnetic mechanism. For example, the coupling part is directly fixed to the manual accelerator operator, and the direct detection part detects a change in position of the coupling part by means of the variable resistance mechanism. For example, the coupling part is directly fixed to the manual accelerator operator, and the direct detection part detects a change in position of the coupling part by means of the switch mechanism.

The "initial position" is a position at which the coupling part is located when the manual accelerator operator is at the fully closed position, for example.

The "adjacent region" is a movable range of the coupling part in which the amount of manipulation of the manual accelerator operator is greater as compared to when the manual accelerator operator is at the fully closed position, for example. The adjacent region corresponds to the movable range of the coupling part excluding the initial position, for example. The adjacent region corresponds to at least a part of the movable range of the coupling part excluding the initial position, for example. A movement of the position of the coupling part from the initial position to the adjacent region corresponds to an event that the rider has manipulated the manual accelerator operator so as to restart the engine, for example. If the position of the coupling part moves from the initial position to the adjacent region, the accelerator manipulation detection sensor transmits a signal indicating a change in position of the coupling part to the control device, for example. The control device detects, as a rider's restart request, a signal indicating that the position of the coupling part received from the accelerator manipulation detection sensor has shifted from the initial position to the adjacent region, for example.

The "restart request" is a request for restarting the engine that has been stopped in response to the establishment of the idling stop condition, for example. The restart request is detected while the combustion operation of the engine is stopped in response to the establishment of the idling stop condition, for example. The restart request represents a rider's intention to restart the engine, for example. The restart request is inputted to the straddled vehicle as a result of the rider manipulating the manual accelerator operator. The restart request is, as an amount of manipulation of the manual accelerator operator, inputted to the control device, for example. The restart request is, as a signal from the accelerator manipulation detection sensor, inputted to the control device, for example. The restart request is detected by the control device, for example. The restart request is detected as a result of the amount of manipulation of the manual accelerator operator reaching the restart value, for example.

The "start-running request" is a request for making the straddled vehicle start running, for example. The start-running request is detected later in time than the restart request, for example. The start-running request is detected simultaneously with sustained ignition or after sustained ignition, for example. The start-running request is detected when the number of revolutions of the engine is not less than the idling rpm, for example. The start-running request is a rider's intention to make the straddled vehicle start running, for example. The start-running request is different from a request for starting the engine while keeping the straddled vehicle stopped, for example. The start-running request is inputted to the straddled vehicle by the rider manipulating the manual accelerator operator. The start-running request is inputted to the control device, in the form of an amount of manipulation of the manual accelerator operator, for example. The start-running request is inputted to the control device, in the form of a signal from the accelerator manipulation detection sensor, for example. The start-running request is detected by the control device, for example. The start-running request is detected as a result of the amount of manipulation of the manual accelerator operator shifting from the fully closed position to the adjacent region, for example. The start-running request is detected as a result of the amount of manipulation of the manual accelerator operator reaching a start-running value, for example. The start-running value may be smaller than the restart value, for example. The start-running value may be equal to the restart value, for example. The start-running value may be greater than the restart value, for example.

The "control device" is configured to detect the restart request while the combustion operation of the engine is stopped in response to the establishment of the idling stop condition, for example. The control device is configured to detect the restart request while an idling stop control is in execution, the idling stop control being a control for stopping the combustion operation of the engine in response to the establishment of the idling stop condition, for example. The control device is configured not to detect the start-running request while the combustion operation of the engine is stopped in response to the establishment of the idling stop condition, for example. The control device, upon detecting the restart request, executes the restart control for restarting the engine, for example.

The control device brings the engine into an idling state by executing the restart control, for example. The control device is configured not to detect the start-running request while the restart control is in execution, for example. The control device terminates the restart control if the engine comes into the idling state (after sustained ignition), for example. The control device is configured to detect the start-running request if the idling state is reached, for example. The control device executes the traveling-purpose combustion operation control if the engine reaches the idling state, for example. The traveling-purpose combustion operation control is an engine control for making the straddled vehicle start running and travel, for example.

In sum, the control device is configured not to detect the start-running request until the engine reaches the idling state, for example. The control device is configured to determine whether or not the engine is in the idling state, for example. The control device is configured to determine whether or not the engine has shifted from a restarting state to the idling state, for example. The restarting state refers to a state from when the engine initiates the combustion operation to when the engine reaches the idling state, for example.

The control device makes a determination about shifting from the restarting state to the idling state, based on at least one parameter, for example. The control device makes a determination about shifting from the restarting state to the idling state, based on the number of revolutions of the engine, for example. If the number of revolutions of the engine is less than the idling rpm, the control device determines that the engine is in the restarting state, for example. If the number of revolutions of the engine is not less than the idling rpm, the control device determines that the engine is in the idling state, for example. The determination about shifting from the restarting state to the idling state may be made based on a parameter different from the number of revolutions of the engine. For example, the control device may make a determination about shifting from the restarting state to the idling state based on an elapsed time since the restart request was detected. The determination about shifting from the restarting state to the idling state may be made based on the number of revolutions of the engine and at least one parameter different from the number of revolutions of the engine.

Here, the sustained ignition refers to a state where the crankshaft is driven in a self-sustaining manner through combustion of a fuel supplied to the engine, without a need for an external driving force of a motor or the like, for example. The sustained ignition refers to a state where the engine is in the idling state, for example. The number of times the ignition needs to be performed until the sustained ignition is not particularly limited. The sustained ignition may be reached upon a first-time ignition, or the sustained ignition may be reached upon a second-time or any subsequent ignition. The initial ignition refers to fuel combustion that occurs for the first time after the engine initiated the combustion operation, for example.

The control device is an electronic control unit (ECU), for example. The control device includes a processor such as a central processing unit (CPU), a digital signal processor (DSP), or the like, for example. The control device may include a non-volatile memory on which recorded are one or more programs including a part or the whole of arithmetic processing to be executed by the control device, for example. The processor reads out and executes the one or more programs recorded on the non-volatile memory, which is disposed in the control device or outside the control device, to enable the control device to carry out stopping and restarting of the engine, for example. That is, the control device carries out the idling-stop function of the engine, for example.

The control device is disposed in the vehicle body of the straddled vehicle, for example. The control device is electrically connected to the direct detection part of the accelerator manipulation detection sensor, for example. The control device receives a signal that the direct detection part transmits, the signal indicating the amount of change in position of the coupling part (the amount of manipulation of the manual accelerator operator), for example. The control device controls an output of the engine based on the received signal indicating the amount of change in position of the coupling part, for example. The control device controls the degree of opening of the throttle valve by controlling the actuator, for example. That is, the straddled vehicle is equipped with an electronic-controlled throttle, for example. The straddled vehicle may be equipped with a mechanical-controlled throttle in which the degree of opening of the throttle valve is controlled by a mechanical wire that is connected to the manual accelerator operator, for example. Here, it should be noted that the control device restarts the engine based on a signal from the accelerator manipulation detection sensor even when the straddled vehicle is equipped with the mechanical-controlled throttle, for example.

The control device controls the amount of fuel to be supplied to the engine, for example. The control device controls fuel ignition, for example. The control device executes a fuel injection process and an ignition process on the engine, if the amount by which the position of the coupling part has changed from the initial position reaches the restart value, for example. The restart value is a threshold that is set for restarting the stopped engine, for example, the threshold being expressed by the amount of change in position of the coupling part. The restart value is not particularly limited. The restart value is smaller than a threshold of the amount of manipulation of a manual accelerator operator for restarting an engine in a straddled vehicle that has a throttle valve and a manual accelerator operator connected by a mechanical wire, and that restarts the engine based on the degree of opening of the throttle valve, for example. The restart value is not less than the minimum value in a detection effective range in the manipulation region on the manual accelerator operator, for example.

The detection effective range is a range in the manipulation region on the manual accelerator operator, in which the accelerator manipulation detection sensor is able to detect a manipulation of the manual accelerator operator. The detection effective range is a range in which the accelerator manipulation detection sensor is able to physically detect a manipulation of the manual accelerator operator, for example. The lower limit of the detection effective range is a minimum amount of manipulation of the manual accelerator operator that can be detected by the accelerator manipulation detection sensor, for example. The upper limit of the detection effective range is an amount of manipulation corresponding to when the manual accelerator operator is at a fully opened position, for example. The fully opened position is a position at which the upper limit of the manipulation region on the manual accelerator operator is located, for example. The detection effective range includes a dead zone, which is a part of the manipulation region on the manual accelerator operator and in which an output of the engine is not changed though the accelerator manipulation detection sensor detects a manipulation of the manual accelerator operator, for example.

A range between the fully closed position and the detection effective range is a range in which the accelerator manipulation detection sensor is not able to detect a manipulation of the manual accelerator operator. The range between the fully closed position and the detection effective range is a range in which the accelerator manipulation detection sensor is not able to physically detect a manipulation of the manual accelerator operator, for example. To be specific, for example, when a slight amount of manipulation is performed on the manual accelerator operator, the position of the coupling part hardly changes, and therefore the accelerator manipulation detection sensor is not able to detect the manipulation of the manual accelerator operator. A range of this slight amount of manipulation corresponds to the range between the fully closed position and the detection effective range. The range between the fully closed position and the detection effective range depends on a detection setting position of the accelerator manipulation detection sensor, for example. The range between the fully closed position and the detection effective range depends on a configuration that transmits a manipulation of the manual accelerator operator to the accelerator manipulation detection sensor, for example. In one example case where the manual accelerator operator and the coupling part are connected by the gear mechanism, the range between the fully closed position and the detection effective range depends on a backlash of the gear, for example.

The range between the fully closed position and the detection effective range is a range between the fully closed position and the minimum value in the detection effective range in the manipulation region on the manual accelerator operator, for example. The range between the fully closed position and the detection effective range does not include a part (dead zone) of the manipulation region on the manual accelerator operator, in which an output of the engine is not changed though the accelerator manipulation detection sensor is able to detect a manipulation of the manual accelerator operator.

In sum, the control device is, for example, configured to restart the engine based on a manipulation of the manual accelerator operator detected by the accelerator manipulation detection sensor so as to shorten a manipulation period, the accelerator manipulation detection sensor being configured to quickly detect a manipulation of the manual accelerator operator by the direct detection part detecting a change in position of the coupling part by means of the magnetic mechanism, the variable resistance mechanism, or the switch mechanism, the manipulation period being a period for which the manual accelerator operator is manipulated from when the rider initiates a manipulation of the manual accelerator operator at the fully closed position in the handlebar with the hand to when the engine initiates a restart as a result of the amount of manipulation of the manual accelerator operator reaching the restart value included in the detection effective range, and
the manual accelerator operator is directly fixed to or indirectly connected to the coupling part via the gear mechanism or the link mechanism.

Shortening the manipulation period for which the manual accelerator operator is manipulated means that the manipulation period for which the manual accelerator operator is manipulated from when the rider initiates a manipulation of the manual accelerator operator at the fully closed position with the hand to when the engine initiates a restart is shorter than that in a straddled vehicle that has a throttle valve and a manual accelerator operator connected by a mechanical wire, and that detects a manipulation of the manual accelerator operator and restarts an engine based on the degree of opening of the throttle valve, for example.

The control device applies a rotational resistance to the crankshaft by means of the starter motor while the crankshaft is in forward rotation after the control device stops the combustion operation of the engine in response to the establishment of the idling stop condition, for example. That is, the control device applies a braking force to the crankshaft by means of the starter motor, to make the crankshaft stop at a predetermined crank angle position, for example. The control device applies a rotational resistance to the crankshaft that is in forward rotation by inertia, for example. The forward rotation of the crankshaft means that the crankshaft rotates in a rotation direction that is the direction in which the crankshaft rotates when the engine performs the combustion operation, for example. The forward rotation means that the crankshaft rotates with the engine repeating an intake stroke, a compression stroke, an expansion stroke, and an exhaust stroke in this order, for example. The control device applies a rotational resistance to the crankshaft by stopping passage of a current in the starter motor, for example. The control device may apply a rotational resistance to the crankshaft by short-circuiting (a winding of) the starter motor, for example.

The control device may apply a force in forward rotation direction to the crankshaft by means of the starter motor while the crankshaft is in forward rotation after the control device stops the combustion operation of the engine in response to the establishment of the idling stop condition, for example. That is, while the crankshaft is in forward rotation by inertia, the control device additionally applies a force in forward rotation direction to the crankshaft, to make the crankshaft rotate up to a predetermined crank angle position, for example.

The control device may apply a force in reverse rotation direction to the crankshaft by means of the starter motor while the crankshaft is in forward rotation after the control device stops the combustion operation of the engine in response to the establishment of the idling stop condition, for example. That is, while the crankshaft is in forward rotation by inertia, the control device applies a force in reverse rotation direction to the crankshaft as if the control device applies a braking force to the crankshaft, to make the crankshaft stop at a predetermined crank angle position, for example. The reverse rotation of the crankshaft means that the crankshaft rotates in a rotation direction that is reverse to the forward rotation direction of the crankshaft, for example.

The control device may apply a rotational resistance to the crankshaft by means of the starter motor while the crankshaft is stopped after the control device stops the combustion operation of the engine in response to the establishment of the idling stop condition, for example. That is, the control device applies a braking force to the crankshaft by means of the starter motor, to maintain a stop position of the crankshaft, for example. The control device allows a current to pass through the starter motor so as to keep the crankshaft stopped, for example.

The control device may apply a force in forward rotation direction to the crankshaft by means of the starter motor while the crankshaft is stopped after the control device stops the combustion operation of the engine in response to the establishment of the idling stop condition, for example. That is, the control device brings the stopped crankshaft into forward rotation, to make the crankshaft rotate up to a predetermined crank angle position, for example.

The control device may apply a force in reverse rotation direction to the crankshaft by means of the starter motor while the crankshaft is stopped after the control device stops the combustion operation of the engine in response to the establishment of the idling stop condition, for example. That is, the control device brings the stopped crankshaft into reverse rotation, to make the crankshaft rotate up to a predetermined crank angle position, for example.

The predetermined crank angle position is not particularly limited. The predetermined crank angle position may be a crank angle position corresponding to the expansion stroke, for example. The predetermined crank angle position may be a crank angle position corresponding to the exhaust stroke, for example. The predetermined crank angle position may be a crank angle position corresponding to the intake stroke, for example. The predetermined crank angle position may be a crank angle position corresponding to the compression stroke, for example.

Here, the control device detects the restart request, after the control device stops the combustion operation of the engine in response to the establishment of the idling stop condition, and then the crankshaft moves to the predetermined crank angle position, for example. The control device may detect the restart request while the crankshaft is moving after the control device stops the combustion operation of the engine in response to the establishment of the idling stop condition, for example. In such a case, the control device executes a control for bringing the crankshaft into forward rotation, if the crankshaft is located at a position that allows the engine to restart, for example.

The control device, upon detecting that the position of the coupling part is shifted from the initial position to the adjacent region based on a signal from the accelerator manipulation detection sensor (upon establishment of the restart condition), restarts the engine by making the stopped crankshaft rotate by means of the starter motor, for example. Here, the control device may restart the engine by making the crankshaft rotate when the crankshaft is not stopped yet while a resistance or a force is being applied to the crankshaft by means of the starter motor, or when the crankshaft is not stopped yet after a resistance or a force is applied to the crankshaft by means of the starter motor, for example. The control device may restart the engine by making the crankshaft in forward rotation rotate by means of the starter motor, for example. The control device may restart the engine by making the crankshaft in reverse rotation rotate by means of the starter motor, for example.

The control device, upon detecting that the position of the coupling part is shifted from the initial position to the adjacent region based on a signal from the accelerator manipulation detection sensor (upon establishment of the restart condition), accelerates the forward rotation of the crankshaft, which the control device has initiated by means of the starter motor, in at least a part of the run-up section, for example. The control device may accelerate the forward rotation of the crankshaft, which the control device has initiated without any reverse rotation of the crankshaft by means of the starter motor, in at least a part of the run-up section, for example.

The "starter motor" is a permanent magnet type three-phase brushless motor, for example. The starter motor is directly or indirectly attached to the crankshaft, for example.

The "starter generator" serves as both a starter motor and a generator, for example. The starter generator has both a function for starting or restarting the engine by rotating the crankshaft and a function for generating electricity by being driven by the engine when the engine is in a combustion operation, for example. When starting or restarting the engine, the starter generator rotates the crankshaft, to start or restart the engine, for example. When the engine is in the combustion operation, the starter generator is driven by the engine, to generate electricity, for example.

The starter generator is a permanent magnet type three-phase brushless motor/generator, for example. The starter generator includes a rotor and a stator, for example. The starter generator may be of an outer rotor type, or may be of an inner rotor type. The rotor includes at least one permanent magnet, for example. The stator includes at least one winding having a conductivity, for example. The stator is arranged such that as the rotor rotates, an induced electromotive force is generated in the winding, for example.

The starter generator is connected to the crankshaft without interposition of a decelerator, for example. More specifically, the rotor is directly connected to the crankshaft, for example. In such a configuration, the rotor rotates at the same rotation speed as the crankshaft does, for example. The starter generator may be connected to the crankshaft with interposition of a decelerator, for example. In such a configuration, too, the rotor rotates with a fixed rotation speed ratio relative to the crankshaft, for example. The starter generator is connected to the crankshaft such that the starter generator rotates with a fixed rotation speed ratio relative to the crankshaft, for example.

The control device, based on signals from the accelerator manipulation detection sensor outputted in response to a series of rider's manipulations on the manual accelerator operator, restarts the engine, increases the output of the engine, and controls both the engine and the starter generator so as to drive the starter generator and add an output of the starter generator to the output of the engine, for example. The control device may control both the engine and the starter generator based on another signal in addition to the signals from the accelerator manipulation detection sensor, for example. Examples of the other signal include an intake volume, an engine temperature, and the like.

### Advantageous Effects of Invention

The present teaching can suppress a variation in time length taken until an engine is restarted, the variation being caused by a variation in speed at which a rider manipulates a manual accelerator operator.

### Brief Description of Drawings

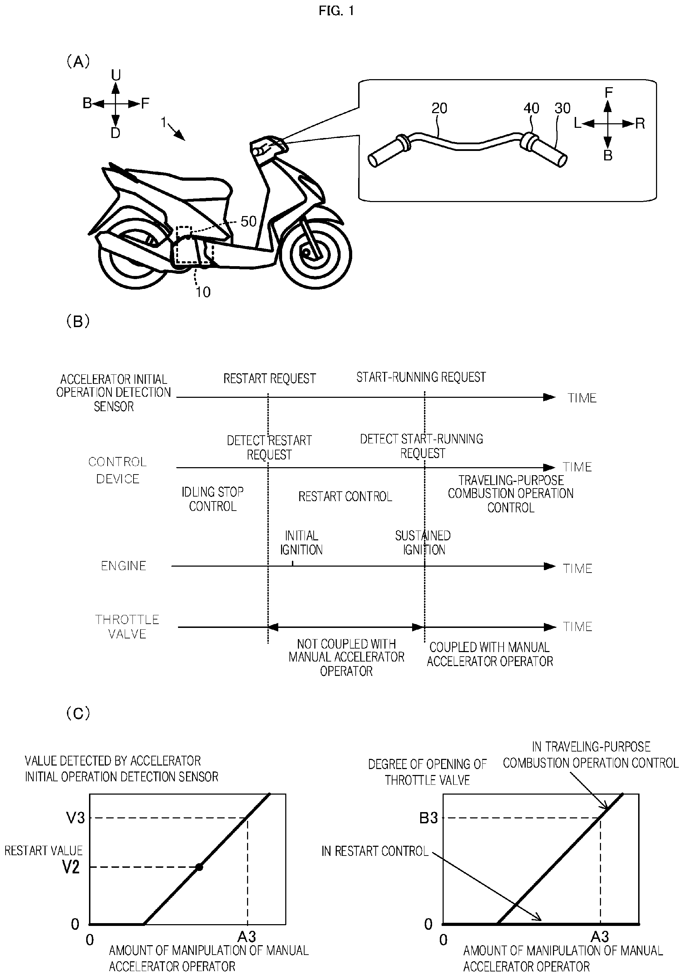

[FIG. 1] FIG. 1(A) shows a side view of a straddled vehicle according to an embodiment, along with illustration of a handlebar, a manual accelerator operator, and an accelerator manipulation detection sensor; FIG. 1(B) is a diagram for explanation of a restart request and a start-running request in the straddled vehicle according to the embodiment; and FIG. 1(C) shows the relationship of the manual accelerator operator, the accelerator manipulation detection sensor, and a throttle valve during a restart control and during a traveling-purpose combustion operation control in the straddled vehicle according to the embodiment.

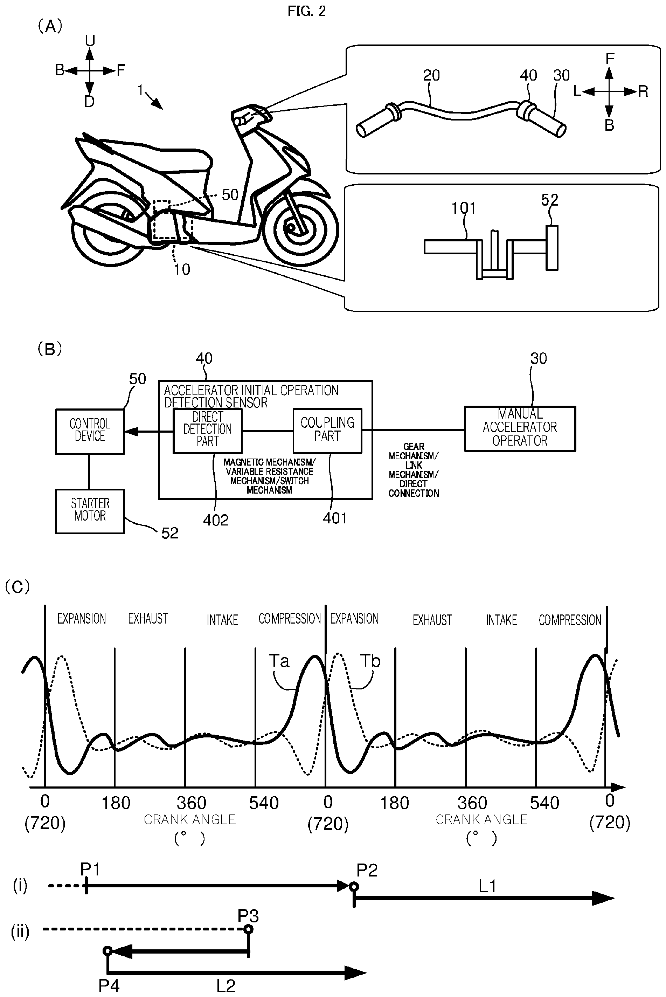

[FIG. 2] FIG. 2(A) shows a side view of the straddled vehicle according to the embodiment, along with illustration of the handlebar, the manual accelerator operator, the accelerator manipulation detection sensor, and a crankshaft; FIG. 2(B) is a block diagram of the manual accelerator operator, the accelerator manipulation detection sensor, and a control device in the straddled vehicle according to the embodiment; and FIG. 2(C) schematically shows the relationship between the crank angle and the required torque in the straddled vehicle according to the embodiment.

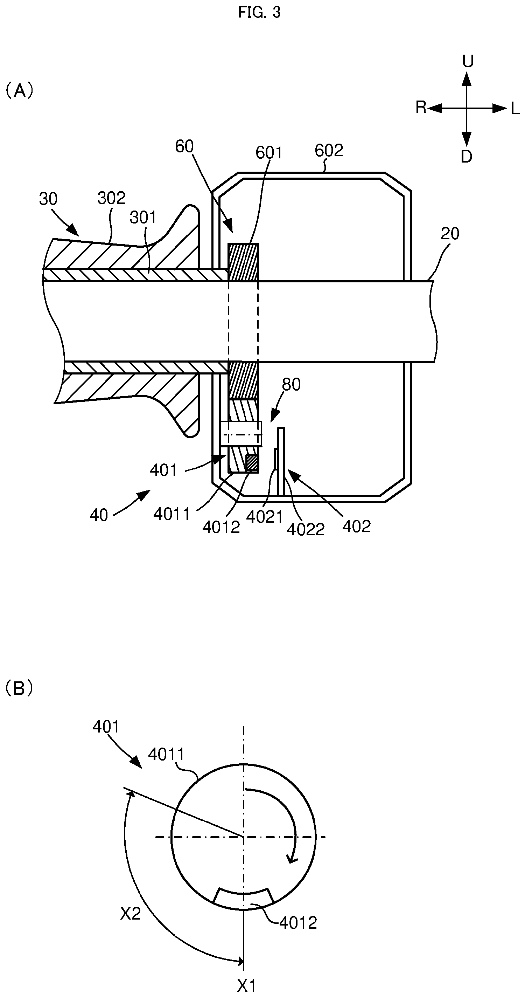

[FIG. 3] FIG. 3(A) shows the manual accelerator operator and the accelerator manipulation detection sensor connected by a gear mechanism in the straddled vehicle according to the embodiment; and FIG. 3(B) shows a change in position of a coupling part in the straddled vehicle according to the embodiment.

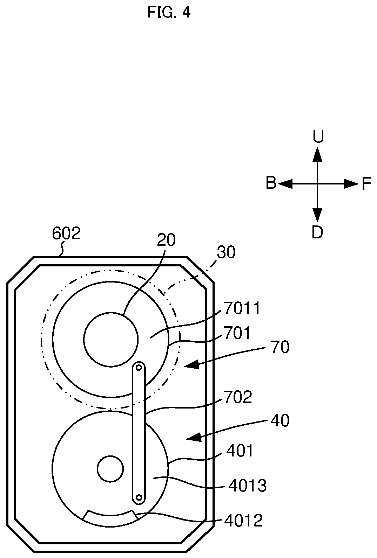

[FIG. 4] FIG. 4 shows the manual accelerator operator and the accelerator manipulation detection sensor connected by a link mechanism in the straddled vehicle according to the embodiment.

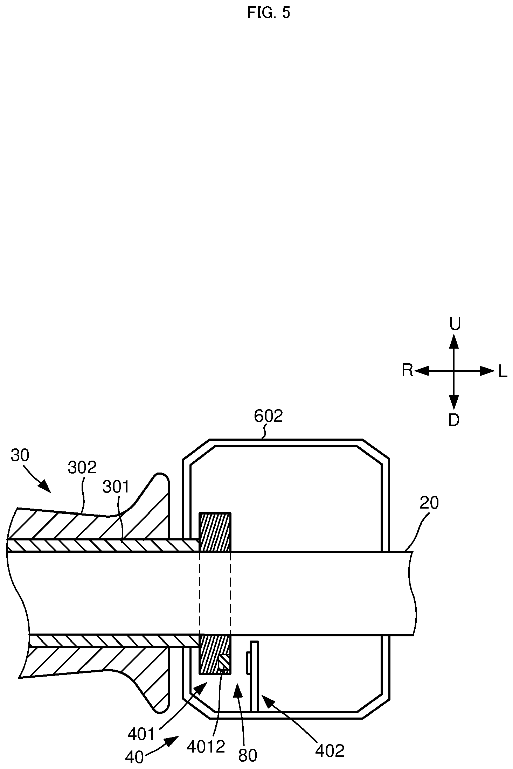

[FIG. 5] FIG. 5 shows the accelerator manipulation detection sensor directly fixed to the manual accelerator operator in the straddled vehicle according to the embodiment.

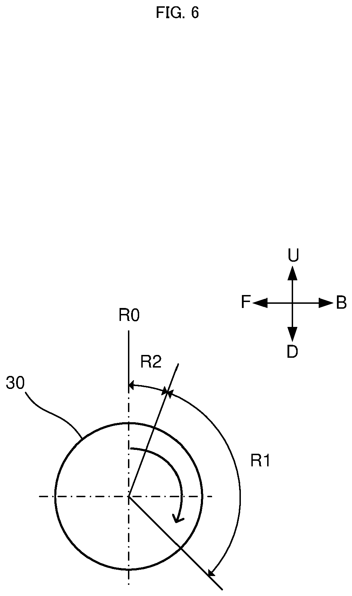

[FIG. 6] FIG. 6 shows a manipulation region on the manual accelerator operator in the straddled vehicle according to the embodiment.

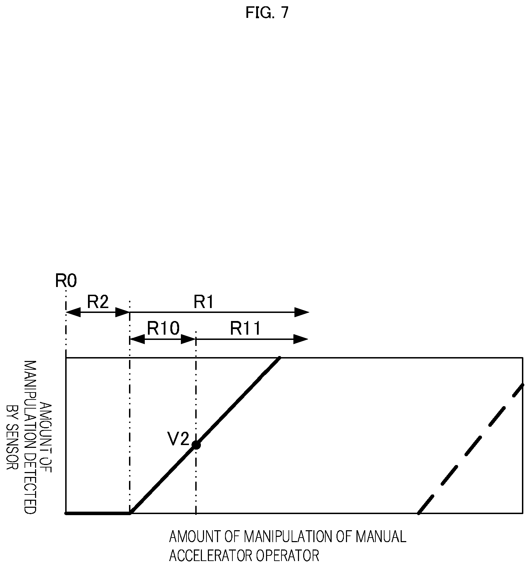

[FIG. 7] FIG. 7 shows the relationship between the amount of manipulation actually performed on the manual accelerator operator and the amount of manipulation of the manual accelerator operator detected by the accelerator manipulation detection sensor in the straddled vehicle according to the embodiment.
[FIG. 8] FIG. 8(A) shows a response time of a throttle valve responding to a manipulation of an accelerator operator in a conventional straddled vehicle in which the accelerator operator and the throttle valve are connected by a mechanical wire; and FIG. 8(B) shows a variation in time length taken until an engine is restarted, the variation being caused by a speed at which the accelerator operator is manipulated, in the conventional straddled vehicle in which the accelerator operator and the throttle valve are connected by the mechanical wire.

### Description of Embodiments

In the following, a straddled vehicle according to an embodiment of the present teaching will be described with reference to the drawings. Here, it should be noted that the embodiment described below is merely an example. The present teaching should not be construed as being limited in any way by the embodiment described below. In the drawings, the characters "F," "B," "U," "D," "L," and "R" represent forward, backward, up, down, left, and right of the straddled vehicle, respectively.

FIG. 1(A) shows a side view of the straddled vehicle according to the embodiment, along with illustration of a handlebar, a manual accelerator operator, and an accelerator manipulation detection sensor. A straddled vehicle 1 is a motorcycle of a scooter type. The straddled vehicle 1 includes an engine 10, a handlebar 20, a manual accelerator operator 30, an accelerator manipulation detection sensor 40, and a control device 50.

The engine 10 is a single-cylinder four-stroke engine. The engine 10 has a crankshaft 101. The handlebar 20 is used to steer the straddled vehicle 1. The manual accelerator operator 30 is disposed in a right end portion of the handlebar 20. A rider manipulates the manual accelerator operator 30 with the hand in order to control an output of the engine 10. The accelerator manipulation detection sensor 40 detects a manipulation of the manual accelerator operator 30.

FIG. 1(B) is a diagram for explanation of a restart request and a start-running request in the straddled vehicle according to the embodiment. The control device 50 detects both a restart request and a start-running request. The restart request is a request for restarting the engine having been stopped in response to the establishment of an idling stop condition. The start-running request is a request for making the straddled vehicle start running. The control device 50 detects the restart request before detecting the start-running request. The restart request is a request different from the start-running request, and is set earlier than the start-running request. Upon detecting the restart request, the control device 50 initiates an engine restart operation before detecting the start-running request.

More specifically, the control device 50, upon detecting the restart request, executes a restart control for controlling the engine 10 until sustained ignition. If the restart control is executed, the engine 10 initiates a combustion operation. If the number of revolutions of the engine 10 reaches an idling rpm, the control device 50 terminates the restart control. Then, upon detecting the start-running request, the control device 50 executes a traveling-purpose combustion operation control. If the traveling-purpose combustion operation control is executed, the engine 10 controls the engine 10 in accordance with the amount of manipulation of the manual accelerator operator 30, that is, in accordance with a signal from the accelerator manipulation detection sensor 40.

FIG. 1(C) shows the relationship of the manual accelerator operator, the accelerator manipulation detection sensor, and the throttle valve during the restart control and during the traveling-purpose combustion operation control in the straddled vehicle according to the embodiment. First, a state of the engine 10 having been stopped in response to the establishment of the idling stop condition will be considered. Suppose that the rider, in this state, manipulates the manual accelerator operator 30 up to a manipulation amount A2, and continues to maintain the amount of manipulation at A2. The accelerator manipulation detection sensor 40 detects the manipulation amount A2 as a value V3. The value V3 is greater than V2, which is a threshold to restart the engine. Thus, the control device 50 recognizes that the restart request is received. The control device 50 executes the restart control.

During execution of the restart control, the control device 50 controls the throttle valve independently of the manual accelerator operator. Shown in this example is a case where the control device 50 keeps the degree of opening of the throttle valve constant during execution of the restart control. It, however, may be possible that the control device 50 varies the degree of opening of the throttle valve during execution of the restart control. The control device 50 is configured to not couple the manual accelerator operator 30 with the throttle valve, which is disposed in an intake pipe of the engine 10, during execution of the restart control.

The execution of the restart control causes the engine 10 to have an initial ignition, and then a sustained ignition. The engine 10 has the initial ignition, and then has the sustained ignition. That is, the number of revolutions of the engine 10 reaches the idling rpm. The control device 50 terminates the restart control, and executes the traveling-purpose combustion operation control. During execution of the traveling-purpose combustion operation control, the control device 50 controls the degree of opening of the throttle valve in accordance with the amount of manipulation of the manual accelerator operator. That is, the control device 50 is configured to couple the manual accelerator operator 30 with the throttle valve during execution of the traveling-purpose combustion operation control. At this time, the amount of manipulation of the manual accelerator operator 30 is maintained at A3. The control device 50, therefore, controls the throttle valve such that the throttle valve has an opening degree B3, which corresponds to the manipulation amount A3 on the manual accelerator operator 30.

FIG. 1(A) shows a side view of the straddled vehicle according to the embodiment, along with illustration of the handlebar, the manual accelerator operator, the accelerator manipulation detection sensor, and the crankshaft. FIG. 2(B) is a block diagram of the manual accelerator operator, the accelerator manipulation detection sensor, and the control device in the straddled vehicle according to the embodiment. The accelerator manipulation detection sensor 40 includes a coupling part 401 and a direct detection part 402. The coupling part 401 is indirectly connected to the manual accelerator operator 30 not via a mechanical wire but via a gear mechanism, and thus is coupled with a manipulation of the manual accelerator operator 30. Here, it may also be acceptable that the coupling part 401 is coupled with a manipulation of the manual accelerator operator 30 by being directly fixed to or indirectly connected to the manual accelerator operator 30 via a link mechanism. The direct detection part 402 is fixed to the handlebar 20. The direct detection part 402 uses a magnetic mechanism to directly detect a change in position of the coupling part 401. The direct detection part 402 may alternatively use a variable resistance mechanism or a switch mechanism to directly detect a change in position of the coupling part 401. The direct detection part 402 detects that the position of the coupling part 401 is changed from an initial position to an adjacent region. The initial position is a position at which the coupling part 401 is located when the manual accelerator operator 30 is free from manipulation. The adjacent region is adjacent to the initial position. The direct detection part 402, by detecting a change in position of the coupling part 401, detects the amount of manipulation of the manual accelerator operator 30. The direct detection part 402 transmits the detected amount of manipulation of the manual accelerator operator 30, as an accelerator command value (accelerator command signal), to the control device 50.

The control device 50 is electrically connected to the accelerator manipulation detection sensor 40 and a starter motor 52. The starter motor 52 is connected to the crankshaft 101 of the engine 10. The control device 50, by means of the starter motor 52, restarts the engine 10 having been in a stopped state in response to the establishment of the idling stop condition.

FIG. 2(C) schematically shows the relationship between the crank angle and the required torque in the straddled vehicle according to the embodiment. In this figure, a required torque Ta for causing forward rotation of the crankshaft is indicated with the solid line, and a required torque Tb for causing reverse rotation of the crankshaft is indicated with the broken line. Indicated in a lower section of the figure is the position of the crankshaft rotated by the starter motor before the control device detects the restart request. (i) shows a case where the starter motor brings the crankshaft into forward rotation, to move the position of the crankshaft. (ii) shows a case where the starter motor brings the crankshaft into reverse rotation, to move the position of the crankshaft.

In the case of (i), after the idling stop condition is established, and the combustion operation of the engine 10 is stopped; once the crankshaft 101 in forward rotation passes position P1, the crankshaft 101 receives a rotational resistance from the starter motor 52, and stops at position P2 in an expansion stroke. If the control device 50 detects that the position of the coupling part 401 has moved from the initial position to the adjacent region based on a signal from the accelerator manipulation detection sensor 40 (if a restart condition is established), the control device 50 brings the crankshaft 101, which is stopped at the position P2, into forward rotation by means of the starter motor 52. The crankshaft 101 is accelerated in a run-up section L1, which is composed of the rest of the expansion stroke, an exhaust stroke, and an intake stroke, to overcome the compression top dead center (720 degrees in crank angle). As a result, the engine 10 is restarted.

In the case of (ii), after the idling stop condition is established, and the combustion operation of the engine 10 is stopped, the crankshaft 101 in forward rotation stops at position P3 in an intake stroke. The control device 50, before detecting the restart request, brings the crankshaft 101, which is stopped at the position P3, into reverse rotation, and returns the crankshaft 101 to position P4 in an expansion stroke. Then, the control device 50, upon detecting the restart request, brings the crankshaft 101, which is stopped at the position P4, into forward rotation by means of the starter motor 52. The crankshaft 101 is accelerated in a run-up section L2, which is composed of the rest of the expansion stroke, an exhaust stroke, and an intake stroke, to overcome the compression top dead center (720 degrees in crank angle). As a result, the engine 10 is restarted.

FIG. 3(A) shows the manual accelerator operator and the accelerator manipulation detection sensor connected by a gear mechanism in the straddled vehicle according to the embodiment. FIG. 3(A) shows a cross-section as cut along a plane including the axis of the handlebar 20. The manual accelerator operator 30 includes a tube guide 301 and a grip 302. The tube guide 301 has a cylindrical shape. Inside the tube guide 301, the handlebar 20 passes. The tube guide 301 is arranged so as to be capable of rotating about the axis of the handlebar 20. The grip 302 has a cylindrical shape, and is fixed to an outer circumferential surface of the tube guide 301. The grip 302 is gripped with the rider's hand, and is manipulated.

A gear mechanism 60 includes a coupling gear 601. The coupling gear 601, though not especially limited, is a spur gear, for example. The coupling gear 601 has a protruding portion, which can be meshed with a groove disposed in an end portion of the tube guide 301. The coupling gear 601 rotates in conjunction with the tube guide 301. The coupling gear 601 is received in a housing 602. The housing 602 is arranged at a position closer to the center of the straddled vehicle 1 in the left-right direction than the grip 302 is. The housing 602 receives the end portion of the tube guide 301, the coupling gear 601, and the accelerator manipulation detection sensor 40.

The coupling part 401 of the accelerator manipulation detection sensor 40 includes a main body portion 4011 and at least one permanent magnet 4012. The main body portion 4011 has a gear-like shape. The main body portion 4011 is arranged in mesh with the coupling gear 601. The main body portion 4011 rotates in conjunction with the coupling gear 601. In other words, the main body portion 4011 rotates in conjunction with the manual accelerator operator 30. The permanent magnet 4012 is fixed to the main body portion 4011. The permanent magnet 4012 is shaped like an arc centered on the rotation axis of the manual accelerator operator 30 when viewed in the direction of the rotation axis of the manual accelerator operator 30. The direction in which the permanent magnet 4012 is magnetized, though not especially limited, is along the radial direction of the manual accelerator operator 30, for example.

The direct detection part 402 of the accelerator manipulation detection sensor 40 includes a Hall element 4021 and a substrate 4022. The Hall element 4021 is arranged to the left of the coupling part 401, for example. The Hall element 4021 is arranged at an interval from the coupling part 401. The Hall element 4021 is arranged in a magnetic field of the permanent magnet 4012. The Hall element 4021 outputs a voltage that is proportional to the magnitude of the flux density of the permanent magnet 4012. The Hall element 4021 is attached to the substrate 4022. The substrate 4022 is electrically connected to the control device 50. The flux density of the permanent magnet 4012 detected by the Hall element 4021 is transmitted to the control device 50 via the substrate 4022.

The Hall element 4021 and the permanent magnet 4012 constitute a magnetic mechanism 80. With the magnetic mechanism 80, the direct detection part 402 detects a change in position of the coupling part 401. In more detail, as the manual accelerator operator 30 is manipulated, the permanent magnet 4012 rotates in conjunction therewith. As the permanent magnet 4012 rotates, the magnetic field around the Hall element 4021 changes, so that the flux density detected by the Hall element 4021 changes.

FIG. 3(B) shows a change in position of the coupling part in the straddled vehicle according to the embodiment. When the manual accelerator operator 30 is free from manipulation, the coupling part 401 is located at an initial position X1. If the manual accelerator operator 30 is manipulated, the position of the coupling part 401 moves to an adjacent region X2, which is adjacent to the initial position X1. This is how the accelerator manipulation detection sensor 40 detects the change in position of the coupling part 401.

FIG. 4 shows the manual accelerator operator and the accelerator manipulation detection sensor connected by a link mechanism in the straddled vehicle according to the embodiment. FIG. 4 shows the manual accelerator operator 30 and the accelerator manipulation detection sensor 40 as viewed in the axial direction of the handlebar 20. In the following, configurations identical to those shown in FIG. 3 will not be described. A link mechanism 70 includes a driver wheel 701 and a link member 702. The driver wheel 701 has a disk-like shape. The driver wheel 701 has a protruding portion, which can be meshed with a groove disposed in the end portion of the tube guide of the manual accelerator operator 30. The driver wheel 701 rotates in conjunction with the manual accelerator operator 30.

The coupling part 401 of the accelerator manipulation detection sensor 40 has a disk-like shape. The coupling part 401 includes at least one permanent magnet 4012. The coupling part 401 is arranged farther in the downward direction than the driver wheel 701. The coupling part 401 is arranged so as not to overlap the driver wheel 701 when viewed in the axial direction of the handlebar 20. The coupling part 401 is not in direct contact with the driver wheel 701.

The link member 702 has a bar-like shape. The link member 702 connects the driver wheel 701 to the coupling part 401. The link member 702 has its one end portion attached to a disk surface 7011 of the driver wheel 701. The one end portion of the link member 702 is attached at a location shifted from the center of the driver wheel 701. The other end portion of the link member 702 is attached to a disk surface 4013 of the coupling part 401. The other end portion of the link member 702 is attached at a location shifted from the center of the coupling part 401. The link member 702 transmits rotation of the driver wheel 701 to the coupling part 401. The link member 702 makes the coupling part 401 rotate in such a manner as to couple with the driver wheel 701.

FIG. 5 shows the accelerator manipulation detection sensor directly fixed to the manual accelerator operator in the straddled vehicle according to the embodiment. FIG. 5 shows a cross-section as cut along a plane including the axis of the handlebar 20. In the following, configurations identical to those shown in FIG. 3 will not be described. In a configuration in which the manual accelerator operator 30 and the coupling part 401 are directly fixed, the coupling part 401 is attached to the tube guide 301 of the manual accelerator operator 30. The coupling part 401 rotates in conjunction with the manual accelerator operator 30. Consequently, the permanent magnet 4012 included in the coupling part 401 rotates in conjunction with the manual accelerator operator 30, too.

The foregoing description illustrates the configuration in which the direct detection part 402 detects a change in position of the coupling part 401 by means of the magnetic mechanism 80. A configuration in which the direct detection part 402 detects a change in position of the coupling part 401 is not limited to this. The direct detection part 402 may detect a change in position of the coupling part 401 by means of a variable resistance mechanism or a switch mechanism. The variable resistance mechanism is configured to have an electrical resistance value that changes in accordance with a change in position of the coupling part 401. The variable resistance mechanism is a potentiometer, for example. The switch mechanism is configured to have a switch that is turned on or off in accordance with a change in position of the coupling part 401.

FIG. 6 shows a manipulation region on the manual accelerator operator in the straddled vehicle according to the embodiment. The manipulation region on the manual accelerator operator 30 includes a fully closed position R0 at which the manual accelerator operator 30 is free from manipulation, and a detection effective range R1 in which the direct detection part 402 detects an amount of manipulation of the manual accelerator operator 30. A range R2 between the fully closed position R0 and the detection effective range R1 is a range in which the direct detection part 402 is not able to detect an amount of manipulation of the manual accelerator operator 30 even if the manual accelerator operator 30 is manipulated.

In the straddled vehicle 1 according to the embodiment, the range R2 between the fully closed position R0 and the detection effective range R1 is shorter than that of a vehicle in which a manual accelerator operator and a throttle valve are connected by a mechanical wire. Accordingly, a manipulation period for which the manual accelerator operator 30 is manipulated is shorter, the manipulation period being a period from when the rider starts manipulating the manual accelerator operator 30, which is located at the fully closed position R0, with the rider's hand to when the engine 10 starts a restart as a result of the amount of manipulation of the manual accelerator operator 30 reaching a restart value included in the detection effective range R1.

FIG. 7 shows the relationship between the amount of manipulation actually performed on the manual accelerator operator and the amount of manipulation of the manual accelerator operator detected by the accelerator manipulation detection sensor in the straddled vehicle according to the embodiment. In this figure, the solid line indicates data on the straddled vehicle according to the embodiment, and the broken line indicates data in a comparative example. The comparative example deals with a straddled vehicle configured to restart an engine by a manipulation of a manual accelerator operator, which is connected to a throttle valve of the engine disposed in a vehicle body by a mechanical wire. The relationship shown for the comparative example is between the amount of manipulation actually performed on the manual accelerator operator and the amount of manipulation of the manual accelerator operator obtained based on the degree of opening of the throttle valve. In the figure, the horizontal axis represents the amount of manipulation actually performed on the manual accelerator operator, and the vertical axis represents the amount of manipulation of the manual accelerator operator detected by each sensor.

In the straddled vehicle according to the comparative example (broken line), for the purpose of eliminating an influence of steering of the handlebar, the mechanical wire that connects the throttle valve to the manual accelerator operator is loosened while the handlebar is not steered. Therefore, even if the manual accelerator operator at the fully closed position is slightly manipulated, an amount of manipulation of the manual accelerator operator is absorbed by the looseness, so that the throttle valve does not work. If the manual accelerator operator at the fully closed position is manipulated beyond a certain threshold, the looseness is removed, so that the throttle valve works. In the straddled vehicle according to the comparative example, the amount of manipulation of the manual accelerator operator is obtained based on a result of detection by a throttle opening sensor, and therefore the amount of manipulation of the manual accelerator operator is not detected until the amount of manipulation of the manual accelerator operator exceeds the certain threshold.

In the straddled vehicle 1 according to the embodiment (solid line), on the other hand, the amount of manipulation of the manual accelerator operator 30, which is used for restarting the engine, is not obtained from the degree of opening of the throttle valve but directly detected by the accelerator manipulation detection sensor 40. In addition, the coupling part 401 of the accelerator manipulation detection sensor 40 is directly fixed to or indirectly connected to the manual accelerator operator 30 via the gear mechanism or the link mechanism. The gear mechanism, the link mechanism, and the direct connection are less vulnerable to the influence of steering of the handlebar, and are able to more easily transmit an amount of manipulation of the manual accelerator operator 30 to the accelerator manipulation detection sensor 40. Thus, the range R2 between the fully closed position R0 and the detection effective range R1 can be narrowed or zeroed, so that the accelerator manipulation detection sensor 40 is able to detect a slight amount of manipulation of the manual accelerator operator 30. This configuration allows the control device 50 to quickly detect a rider's restart request, which is reflected in a manipulation of the manual accelerator operator 30. Since the engine in the stopped state is restarted by using such a configuration, it is possible to restart the engine with a small amount of manipulation of the manual accelerator operator 30. Accordingly, the straddled vehicle 1 according to the embodiment can suppress a variation in time length taken until the engine is restarted, the variation being caused by a variation in speed at which the rider manipulates the manual accelerator operator 30.

In the above-described embodiment, the manipulation region on the manual accelerator operator 30 has a dead zone R10. The restart value V2, which indicates the amount of manipulation of the manual accelerator operator 30 at which the control device 50 restarts the engine 10, is set to the minimum amount of manipulation of the manual accelerator operator 30 in a throttle valve operation range R11. The throttle valve operation range R11 is a range in the detection effective range R1, the range being beyond the dead zone R10. The straddled vehicle 1 according to the embodiment is not limited to this. In the straddled vehicle 1, the dead zone R10 may not always have to be provided.

In the configuration described above, the straddled vehicle 1 includes the starter motor 52. Here, the starter motor 52 may be a starter generator. The starter generator may assist the output of the engine 10.

### Reference Signs List

- 1: : straddled vehicle
- 10: : engine
- 101: : crankshaft
- 20: : handlebar
- 30: : manual accelerator operator
- 40: : accelerator manipulation detection sensor
- 401: : coupling part
- 402: : direct detection part
- 50: : control device
- 52: : starter motor
- 60: : gear mechanism
- 70: : link mechanism
- 80: : magnetic mechanism
- X1: : initial position
- X2: : adjacent region

## Claims

1. A straddled vehicle comprising:
an engine having a crankshaft;
a handlebar used for steering;
a manual accelerator operator disposed in the handlebar, the manual accelerator operator being configured to allow a rider to manipulate the manual accelerator operator with the hand in order to control an output of the engine; and
a control device configured to restart the engine having been stopped in response to an establishment of an idling stop condition, by means of a starter motor,
the straddled vehicle further comprising an accelerator manipulation detection sensor configured to detect a manipulation of the manual accelerator operator, the accelerator manipulation detection sensor being disposed in the handlebar,
the control device being configured to detect both a start-running request and a restart request based on a signal from the accelerator manipulation detection sensor, which is disposed in the handlebar and configured to detect that the manual accelerator operator is manipulated, so as to detect the restart request that then initiates a restart operation for restarting the engine before detecting the start-running request, with a detection of the restart request being sequentially before a detection of the start-running request, the start-running request being a request for making the straddled vehicle start running, the restart request being a request different from the start-running request, the restart request being a request for restarting the engine having been stopped in response to the establishment of the idling stop condition, and being set earlier than the start-running request.

2. The straddled vehicle according to claim 1, wherein
the control device is configured to
while the crankshaft is in forward rotation or is stopped after the control device stops a combustion operation of the engine in response to the establishment of the idling stop condition, apply: a rotational resistance; a force in forward rotation direction; or a force in reverse rotation direction, to the crankshaft by means of the starter motor to move a position of the crankshaft before the restart request is detected, and
after detecting the restart request based on a signal from the accelerator manipulation detection sensor disposed in the handlebar, execute not a control for bringing the crankshaft into reverse rotation, but execute a control for bringing the crankshaft into forward rotation, to restart the engine.

3. The straddled vehicle according to claim 1 or 2, wherein
the accelerator manipulation detection sensor includes
a coupling part configured to be coupled with a manipulation of the manual accelerator operator by being directly fixed to or indirectly connected to the manual accelerator operator not via a mechanical wire but via a gear mechanism or a link mechanism, and
a direct detection part configured to directly detect a change in position of the coupling part by means of a magnetic mechanism, a variable resistance mechanism, or a switch mechanism, the direct detection part being fixed to the handlebar,
the accelerator manipulation detection sensor detects that the position of the coupling part is moved from an initial position to an adjacent region, the initial position being a position at which the coupling part is located when the manual accelerator operator is free from manipulation, the adjacent region being adjacent to the initial position, and
the control device restarts the engine when, as one condition, movement of the position of the coupling part from the initial position to the adjacent region is detected based on a signal from the accelerator manipulation detection sensor, which is disposed in the handlebar and connected to the manual accelerator operator without any mechanical wire.

4. The straddled vehicle according to any one of claims 1 to 3, wherein
the starter motor is a starter generator having a power generation function, and
upon detecting the restart request based on a signal from the accelerator manipulation detection sensor disposed in the handlebar before detecting the start-running request, the control device not only initiates a restart operation for restarting the engine but also drives the starter motor and executes an initial ignition assist control for controlling the starter motor so as to add an output of the starter motor to an output of the engine, the initial ignition assist control being executed in at least a part of a period from detection of the restart request to initial ignition of the engine.

5. The straddled vehicle according to any one of claims 1 to 4, wherein
the starter motor is a starter generator having a power generation function, and
upon detecting the restart request based on a signal from the accelerator manipulation detection sensor disposed in the handlebar before detecting the start-running request, the control device not only initiates a restart operation for restarting the engine but also drives the starter motor and executes a sustained ignition assist control for controlling the starter motor so as to add an output of the starter motor to an output of the engine, the sustained ignition assist control being executed in at least a part of a period from initial ignition of the engine to sustained ignition of the engine.

6. The straddled vehicle according to any one of claims 1 to 5, wherein
upon detecting the start-running request based on a signal from the accelerator manipulation detection sensor disposed in the handlebar, the control device executes a traveling-purpose combustion operation control for controlling the engine so as to couple the manual accelerator operator with a throttle valve disposed in an intake pipe of the engine.

7. The straddled vehicle according to any one of claims 1 to 6, wherein
upon detecting the restart request based on a signal from the accelerator manipulation detection sensor disposed in the handlebar before detecting the start-running request, the control device executes a restart control for controlling the engine until sustained ignition.

8. The straddled vehicle according to claim 7, wherein
upon detecting the restart request based on a signal from the accelerator manipulation detection sensor disposed in the handlebar before detecting the start-running request, the control device executes the restart control so as to prevent coupling the manual accelerator operator with a throttle valve disposed in an intake pipe of the engine.
